# FASCICULE DE BREVET EUROPEEN

(11) **EP 2 799 294 B1**
(45) Date de publication et mention de la délivrance du brevet: **03.07.2019**
(21) Numéro de dépôt: 14166266.8
(22) Date de dépôt: 28.04.2014
(51) Int. Cl.: B60S 1/38

(54) **Dispositif chauffant destiné à un balai d'essuie-glace et balai d'essuie glace comportant un tel dispositif chauffant**
Heizvorichtung für Wischerblatt und Wischerblatt mit einer derartigen Heizvorrichtung
Heating device for a wiper blade and wiper blade comprising such heating device

(30) Priorité: 30.04.2013 FR 1353985
(43) Date de publication de la demande: 05.11.2014
(73) Titulaire: Valeo Systèmes d'Essuyage, 78322 Le Mesnil Saint Denis (FR)
(72) Inventeur: Caillot, Gérald, 78720 Cernay La Ville (FR)
(74) Mandataire: Callu-Danseux, Violaine

(56) Documents cités:
- WO-A1-2010/044768
- WO-A1-2012/000868
- US-A1- 2012 291 216

## Description

La présente invention a pour objet un dispositif chauffant destiné à un balai d'essuie-glace ainsi que le balai d'essuie-glace comportant un tel dispositif chauffant.

L'invention s'applique notamment à un dispositif chauffant comprenant un élément structurel tel qu'une vertèbre sur laquelle est disposé un élément chauffant, la vertèbre étant reliée à une lame racleuse du balai d'essuie-glace.

Le document US2012291216 A1 décrit un dispositif chauffant selon le préambule de la revendication 1.

Des essuie-glaces comprenant des éléments chauffants peuvent être installés sur des véhicules afin notamment de dégeler le balai en cas de grand froid et éviter qu'il colle au pare-brise sous l'action du gel et/ou assurer le dégivrage des rampes d'arrosage intégrées au balai.

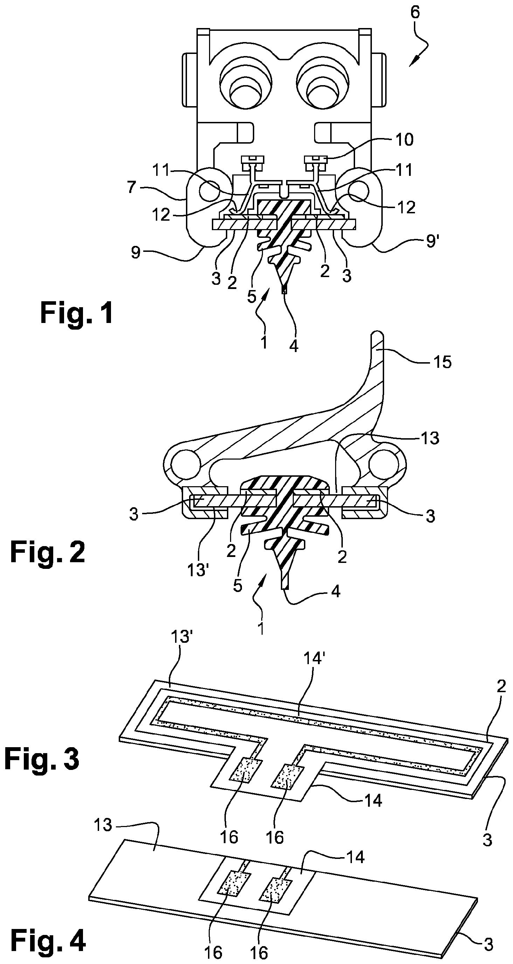

Typiquement, tel que cela est représenté sur les figures 1 et 2, un balai 1 d'essuie-glace chauffant de l'état de la technique comporte :
- deux vertèbres 3 en forme de lame qui supportent une pièce de forme 15, couramment appelée « spoiler »;
- deux films chauffants 2 comportant des résistances électriques, chaque film chauffant 2 étant disposé sur l'une des faces d'une vertèbre 3 respective ;
- une lame racleuse 4 axée longitudinalement, comportant un corps 5 axé longitudinalement qui comporte des moyens de connexion des vertèbres 3 ; ces moyens de connexion consistent en deux rainures latérales, axées longitudinalement, conformées de manière à permettre à chaque vertèbre 3 d'être montée longitudinalement à l'intérieur d'une rainure respective.
Le balai 1 est relié au bras d'actionnement d'un essuie-glace au moyen d'un élément de liaison hydraulique et électrique 6 qui comporte :
- un connecteur hydraulique 7 qui comprend au moins deux paires de raccords de sortie (non représentées) destinées à être connectées chacune à une rampe d'acheminement et de distribution d'un fluide de nettoyage et/ou de dégivrage (non représentée), ces rampes qui sont disposées de part et d'autre du balai 1 ou comprises dans le balai 1 permettent d'éjecter le fluide à proximité ou directement du balai 1 ; au moins un raccord d'entrée (non représenté) connecté d'une part à un conduit d'arrivée (non représenté) relié à une source en fluide de nettoyage et/ou de dégivrage, et d'autre part aux raccords de sortie ; et un dispositif, tel qu'une vanne multivoies (non représentée), permettant de guider l'écoulement du fluide vers l'une des deux paires de raccords de sortie, en fonction du sens de pulvérisation désiré du fluide de nettoyage et/ou de dégivrage ;
- un adaptateur qui permet au balai 1 d'être articulé au bras d'actionnement de l'essuie-glace, cet adaptateur 8 étant connecté au connecteur hydraulique 7.

Le connecteur hydraulique 7 comprend deux crochets longitudinaux 9, 9' disposés en vis-à-vis, délimitant en partie un logement longitudinal dans lequel le balai 1 se trouve partiellement disposé en position finale de montage.

Chaque crochet 9, 9' comprend sur sa face interne une rainure longitudinale conformée de manière à permettre à chaque vertèbre 3 d'être montée longitudinalement à l'intérieur d'une rainure respective.

De cette façon, le balai 1 est construit en disposant le balai 1 sous le connecteur hydraulique 7, en orientant les vertèbres 3 de manière à ce qu'elles forment chacune un angle sensiblement égal à 45° par rapport au plan de coupe horizontal du balai 1, en abaissant le connecteur 7 selon un mouvement de translation verticale, puis en introduisant chaque vertèbre 3 dans une rainure respective du connecteur hydraulique 7. Le corps 5 de la lame racleuse 4 est réalisé en une matière souple afin de permettre d'orienter convenablement les vertèbres 3 lors du montage du balai 1 et de l'élément de liaison hydraulique 6.

Le connecteur hydraulique 7 comporte un connecteur électrique (non représenté) relié au circuit électrique du véhicule.

Le connecteur hydraulique 7 est connecté aux films chauffants 2 au moyen d'un dispositif de connexion électrique 10 qui comporte une paire de pieds électriquement conducteurs 11 reliés au connecteur électrique. Chaque pied 11 présente sensiblement la forme d'une languette comprenant à son extrémité un patin 12 en contact avec un film chauffant 2 respectif. La face de la vertèbre 3 sur laquelle est disposé le film chauffant 2 se trouve en position assemblée en regard des patins 12, cette face étant dite supérieure.

Il s'avère qu'un changement de matière des éléments chauffants peut être souhaitable, afin de mieux résister à la corrosion et à l'abrasion, ce qui se traduit, lorsque l'on remplace par exemple le laiton par l'acier inox, par la nécessité d'augmenter la dimension des éléments chauffants en raison d'une résistivité distincte du laiton et de l'acier inox.

Cependant, en augmentant la dimension des éléments chauffants dans un espace réduit, l'élément chauffant peut présenter une largeur supérieure à celle de la vertèbre ou tout au moins une largeur pouvant entraîner des contacts indésirables avec certaines parties du connecteur.

La présente invention a pour objet de remédier à ces inconvénients en proposant un dispositif chauffant compris dans un balai d'essuie-glace ainsi que le balai d'essuie-glace comportant un tel dispositif chauffant, dont la structure permet d'assembler la vertèbre sur laquelle est disposé un élément chauffant de plus grande dimension, sans nécessiter l'augmentation de la largeur de la vertèbre et sans créer lesdits contacts indésirables. Il n'est donc pas nécessaire de modifier la structure générale du balai d'essuie-glace lorsque l'on modifie le métal du dispositif chauffant.

A cet effet, elle propose un dispositif chauffant apte à être monté sur un balai d'essuie-glace articulé sur un bras d'actionnement par l'intermédiaire d'un élément de liaison comprenant un connecteur mécanique auquel est connecté le balai, le balai s'étendant au moins partiellement dans un logement du connecteur mécanique,
ce connecteur mécanique comprenant un connecteur électrique relié au circuit électrique du véhicule et un dispositif de connexion électrique relié au connecteur électrique, ce dispositif de connexion électrique s'étendant au moins partiellement dans ledit logement du connecteur mécanique, le dispositif chauffant comportant :
- au moins une vertèbre apte à être montée dans au moins un logement du balai d'essuie-glace, une face dite supérieure de la vertèbre se trouvant en regard du bras d'actionnement en position assemblée du balai avec le bras d'actionnement et une face dite inférieure étant opposée à la face supérieure;
- au moins un élément chauffant dont une première partie est disposée sur la face supérieure de la vertèbre,
une seconde partie de l'élément chauffant étant disposée sur la face inférieure de la vertèbre, les premières et secondes parties de l'élément chauffant étant en contact électrique l'une avec l'autre, caractérisé en ce que la première partie de l'élément chauffant est disposé sur la face supérieure de la vertèbre uniquement au niveau d'une zone de contact avec le dispositif de connexion électrique.

De cette façon, l'élément chauffant peut être installé facilement sur la vertèbre en déposant la seconde partie de l'élément chauffant sur l'une des grandes faces de la vertèbre, puis en rabattant la première partie de l'élément chauffant sur l'autre grande face.

En autre, la seconde partie de l'élément chauffant disposée sur la face inférieure de la vertèbre peut présenter une largeur plus importante, cette partie inférieure s'étendant dans un espace peu encombré. De plus, le contact électrique avec le dispositif de connexion électrique est assuré par la première partie de l'élément chauffant disposée sur la face supérieure de la vertèbre, cette première partie présentant une surface réduite, lui permettant de s'étendre dans un espace limité.

Préférentiellement, la vertèbre présente sensiblement la forme d'une lame longitudinale de section rectangulaire qui comporte deux grandes faces longitudinales opposées, à savoir :
- une grande face supérieure se trouvant en regard du bras d'actionnement en position assemblée du balai avec le bras d'actionnement ;
- une grande face inférieure se trouvant en regard de la lame racleuse, l'élément chauffant étant disposé sur la grande face supérieure, au moins l'un des bords longitudinaux de la vertèbre et sur la grande face inférieure.

De manière préférentielle, l'élément chauffant est un film chauffant. L'élément chauffant peut également être notamment des fils chauffants ou une couche de peinture résistive.

Le film chauffant est préférentiellement souple afin de faciliter sa pose sur la vertèbre.

Avantageusement, la première partie de l'élément chauffant ne génère pas de calories sur la face supérieure de la vertèbre.

De manière préférentielle, le film chauffant est collé sur la vertèbre.

Préférentiellement, la première partie du film chauffant disposée sur la face supérieure de la vertèbre comprend une piste conductrice dont au moins l'une des extrémités présente sensiblement la forme d'un pavé de contact sur lequel le dispositif de connexion électrique est en contact. La piste conductrice de l'élément chauffant est disposée de préférence entre deux feuilles réalisées en matériau électriquement isolant.

L'élément chauffant est disposé de manière avantageuse sur la face supérieure de la vertèbre, sur au moins l'un des bords longitudinaux de la vertèbre et sur la grande face inférieure de la vertèbre.

De manière avantageuse, la section de l'élément chauffant située sur au moins un des bords longitudinaux de la vertèbre est différente de la section de l'élément chauffant située au niveau de la face inférieure.

Alternativement, la section de l'élément chauffant située au niveau de la face supérieure de la vertèbre et sur au moins un des bords longitudinaux de la vertèbre est différente de la section de l'élément chauffant située au niveau de la face inférieure.

La forme spécifique de l'extrémité de la piste conductrice permet avantageusement d'optimiser le contact électrique entre le dispositif de connexion électrique et le film chauffant.

Selon une variante d'exécution, le dispositif chauffant comporte deux vertèbres et est apte à être connecté au corps d'une lame racleuse d'un balai d'essuie-glace par insertion dans deux logements latéraux dudit corps. Ces logements consistent préférentiellement en deux rainures latérales axées longitudinalement, chaque vertèbre étant apte à être montée longitudinalement à l'intérieur d'une rainure respective.

Selon une autre variante d'exécution de l'invention, le dispositif chauffant est apte à être monté sur une monture de support d'un balai d'essuie-glace par coulissement dans un logement de la monture de support, la vertèbre du dispositif chauffant étant apte à être montée longitudinalement à l'intérieur du logement de la monture de support.

La présente invention a également pour objet un balai d'essuie-glace, caractérisé en ce qu'il comprend un dispositif chauffant selon l'invention.

La présente invention a également pour objet un essuie-glace caractérisé en ce qu'il comprend un balai d'essuie-glace selon l'invention.

Le balai d'essuie-glace pouvant être avantageusement constitué par des éléments de structure du type :
- un support longitudinal comprenant un logement apte à recevoir un dispositif selon l'invention,
- une lame racleuse fixée audit support,
- un accessoire ou « spoiler » pouvant comporter au moins une rampe de projection d'un liquide de lavage, ledit accessoire étant assemblé audit support.

Le balai d'essuie-glace pouvant également être constitué par des éléments de structure du type :
- un corps comportant deux logements latéraux aptes à recevoir le dispositif selon l'invention,
- une lame racleuse.

D'autres caractéristiques et avantages de la présente invention apparaîtront à la lumière des exemples qui vont suivre et des figures ci-annexées, lesdits exemples et figures étant donnés à titre illustratif et nullement limitatif.
La figure 1, déjà décrite, est une représentation, selon une coupe transversale au droit de l'élément de liaison hydraulique, d'un balai d'essuie-glace à deux vertèbres et de l'élément de liaison hydraulique, avec une mise en évidence du dispositif de connexion électrique assurant le contact électrique avec l'élément chauffant du balai.
La figure 2, déjà décrite, est une représentation, selon une coupe transversale décalée de l'élément de liaison hydraulique, du balai d'essuie glace représenté sur la figure 1.
La figure 3 est une vue de la face inférieure du dispositif chauffant selon l'invention avec une mise en évidence de l'intégralité de l'élément chauffant.
La figure 4 est une vue de la face supérieure du dispositif chauffant selon l'invention.
La figure 5 est une représentation, selon une coupe transversale au droit de l'élément de liaison hydraulique, du balai d'essuie-glace selon l'invention et de l'élément de liaison hydraulique.
La figure 6 est une représentation, selon une coupe transversale au droit de l'élément de liaison hydraulique, du balai d'essuie-glace selon l'invention et de l'élément de liaison hydraulique, avec une disposition spécifique de l'élément chauffant sur la vertèbre de l'élément chauffant.
La figure 7 est une représentation d'un balai d'essuie-glace à vertèbre unique selon l'invention et d'un connecteur électrique.
La figure 8 est une représentation, selon une coupe transversale décalée de l'élément de liaison, d'un balai d'essuie-glace selon l'invention.
La figure 9 est une vue isométrique de la face inférieure et supérieure du dispositif chauffant selon un deuxième mode de réalisation de l'invention.
La figure 10 est une vue isométrique de la face inférieure et supérieure du dispositif chauffant selon un troisième mode de réalisation de l'invention.

Dans un souci de bonne compréhension, dans la suite de l'exposé, les éléments communs aux différentes figures portent les mêmes références.

Tel que cela est représenté sur les figures 3 et 4, le dispositif chauffant selon l'invention comporte une vertèbre 3 qui présente sensiblement la forme d'une lame longitudinale, de section rectangulaire, qui comporte deux grandes faces longitudinales opposées, à savoir une grande face supérieure 13 et une grande face inférieure 13'. En position connectée de la vertèbre 3 et du corps du balai 1, la grande face supérieure 13 est disposée du côté convexe du corps 5 de la lame racleuse 4, la grande face inférieure 13' étant disposée du côté concave du corps 5 de la lame racleuse.

La vertèbre 3 est réalisée en un matériau relativement rigide tel que l'acier afin de transférer la pression du bras sur toute la longueur de la lame racleuse.

Un élément chauffant 2 est disposé sur la face inférieure 13' ainsi que sur la face supérieure 13 de la vertèbre 3, en assurant un contact électrique entre la première partie 14 de l'élément chauffant 2 disposée sur la face supérieure 13 et la seconde partie 14' de l'élément chauffant 2 disposée sur la face inférieure 13' de la vertèbre 3.

Cet élément chauffant 2 est un film chauffant qui peut être composé d'au moins un ruban métallique conducteur résistif ou d'au moins une piste métallique conductrice résistive disposé(e) entre une feuille supérieure et une feuille inférieure réalisées en matériau électriquement isolant.

Le film chauffant 2 d'une seule pièce comprend :
- une seconde partie 14' présentant une forme sensiblement rectangulaire, destinée à être disposée sur la face inférieure 13' de la vertèbre 3 ;
- une première partie 14 de plus petites dimensions que la seconde partie 14', qui présente une forme sensiblement rectangulaire, et destinée à être disposée sur la face supérieure 13 et sur l'une des bordures longitudinales de la vertèbre 3.

De cette façon, le film chauffant 2 peut être installé facilement sur la vertèbre 3 en déposant d'abord la seconde partie 14' du film chauffant 2 sur la grande face inférieure 13' de la vertèbre 3, puis en rabattant la première partie 14 du film chauffant 2 sur une bordure longitudinale et sur la grande face supérieure 13 de la vertèbre 3.

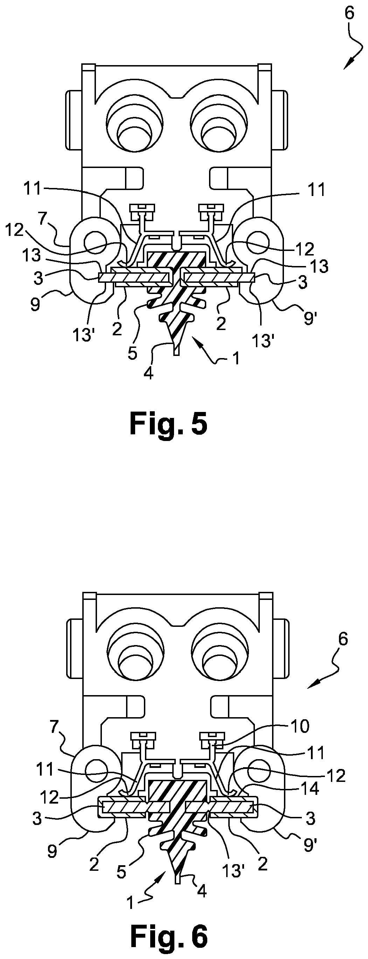

Le balai 1 d'essuie-glace chauffant représenté sur les figures 5 et 6 comporte :
- deux vertèbres 3 ;
- deux films chauffants 2, chaque film chauffant 2 étant disposé sur la face inférieure 13', un côté longitudinal et sur la face supérieure 13 d'une vertèbre 3 respective, comme précédemment décrit ;
- une lame racleuse 4 axée longitudinalement, surmontée d'un corps 5 axé longitudinalement qui comporte des moyens de connexion des vertèbres 3 ; ces moyens de connexion consistent en deux logements latéraux consistant en des rainures axées longitudinalement, conformées de manière à permettre à chaque vertèbre 3 d'être montée longitudinalement, à l'intérieur d'une rainure respective, en disposant un bord longitudinal de la vertèbre en regard de l'ouverture longitudinale de la rainure et en imprimant à la vertèbre 3 un mouvement de translation dirigé vers la rainure.

Le film chauffant 2 peut être disposé, tel que cela est représenté sur la figure 5, sur le côté longitudinal de la vertèbre 3 s'étendant dans la rainure du corps 5 du balai 1, en position connectée de la vertèbre 3 et du corps 5 de la lame racleuse 4.

Tel que cela est représenté sur la figure 6, le film chauffant 2 peut également être disposé sur le côté longitudinal de la vertèbre 3 opposé à celui s'étendant dans la rainure du corps 5 de la lame racleuse 4, en position connectée de la vertèbre 3 et du corps 5 du balai 1. Ce côté longitudinal opposé est le côté d'emboîtement de la vertèbre 3 dans la rainure du connecteur hydraulique 7.

Le balai 1 est relié au bras d'actionnement d'un essuie-glace au moyen d'un élément de liaison hydraulique 6 identique à celui représenté sur la figure 1 et précisé plus haut.

Le connecteur hydraulique 7 est connecté aux films chauffants 2 au moyen d'un dispositif de connexion électrique 10 qui comporte au moins une paire de pieds électriquement conducteurs 11 reliés au connecteur électrique et qui s'étendent au moins partiellement dans ledit logement du connecteur hydraulique 7. Chaque pied 11 présente sensiblement la forme d'une languette comprenant à son extrémité un patin 12 en contact avec le film chauffant 2 disposé sur la face supérieure 13 de la vertèbre 3.

Tel que cela est visible sur la figure 4, la première partie 14 du film chauffant 2 disposée sur la face supérieure 13 de la vertèbre 3 comprend une piste conductrice dont les deux extrémités présentent sensiblement la forme d'un pavé de contact 16 sur chacun desquels un patin 12 est en contact. Le pavé de contact 16 définit la zone de contact avec le patin 12 du dispositif de connexion 10. Cette zone de contact en située sensiblement au milieu de la vertèbre, en regard du dispositif de connexion 10 afin de faciliter le contact électrique.

Les pavés de contact 16 sont dépourvus de la feuille isolante supérieure afin de permettre le contact électrique entre la piste conductrice et les patins 12.

La surface de la première partie 14 du film chauffant 2 disposée sur la face supérieure 13 de la vertèbre 3 correspond sensiblement à la surface sensiblement en regard du dispositif de connexion électrique 10, en position connectée du balai 1 avec le connecteur hydraulique 7.

De cette façon, la première partie 14 du film chauffant 2 disposée sur la face supérieure 13 de la vertèbre 3 présente une surface réduite qui permet notamment à cette partie première 14 de s'étendre dans un espace limité, et de disposer un film chauffant 2 de plus grande largeur sur la vertèbre 3.

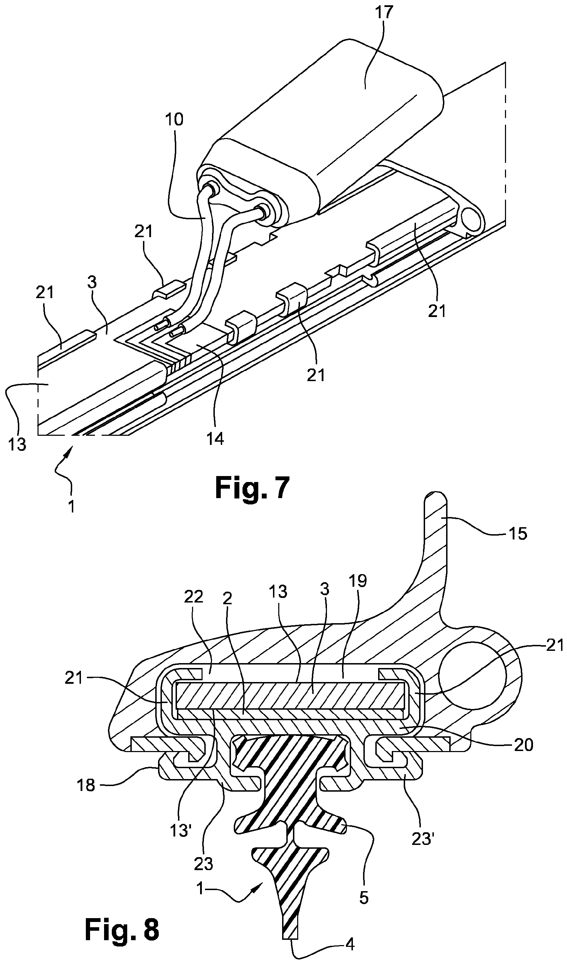

Tel que cela est représenté sur les figures 7 et 8, qui décrit une autre variante d'exécution, le dispositif chauffant selon l'invention peut être également installé dans un balai 1 d'essuie-glace du type « flat-blade » à vertèbre unique . Un balai 1 d'essuie-glace de ce type comprend :
- une monture de support 18 ayant un corps tubulaire axé longitudinalement qui comporte un logement longitudinal 19 qui débouche au moins à l'une des extrémités longitudinales de la monture de support 18, et des moyens de connexion d'une lame racleuse 4 ;
- une vertèbre 3 disposée à l'intérieur du corps tubulaire ; et
- un élément de liaison monobloc (non représenté) permettant de relier le balai 1 avec un bras d'actionnement, qui comprend un connecteur électrique 17 du type susdit.

Le logement longitudinal 19 est délimité par une âme longitudinale 20 et par deux parois 21 prolongeant chacune un bord longitudinal de l'âme 20, chaque paroi 21 comprenant :
- une première partie s'étendant transversalement par rapport à ladite âme 20 ;
- une seconde partie définissant un repli, les deux replis des parois 21 venant en retour l'un vers l'autre parallèlement à ladite âme 20 de manière à délimiter une fente longitudinale 22 ;
le logement 19 étant symétrique par rapport à l'axe médian et transversal de ladite âme 20.

De cette façon, l'âme 20 et les replis permettent d'assurer un blocage de la vertèbre 3 dans le logement 19 dans une direction sensiblement orthogonale à l'âme 20.

Les moyens de connexion de la lame racleuse consistent en deux crochets longitudinaux 23, 23' disposés en vis-à-vis, délimitant un second logement longitudinal qui présente une conformité de forme avec l'extrémité supérieure du corps 5 de la lame racleuse 4. De cette manière, après avoir introduit l'extrémité supérieure du corps 5 de la lame racleuse 4 dans ce second logement, la lame racleuse 4 fait l'objet d'un coulissement longitudinal jusqu'à sa position finale.

L'élément chauffant 2 est disposé sur la face inférieure 13' ainsi que sur la face supérieure 13 de la vertèbre 3, en assurant un contact électrique entre la première partie 14 de l'élément chauffant 2 disposée sur la face supérieure 13 et la seconde partie 14' de l'élément chauffant 2 disposée sur la face inférieure 13' de la vertèbre 3.

Tel que cela est représenté sur la figure 7, l'élément chauffant 2 est disposé sur la face supérieure 13 de façon à permettre aux extrémités du dispositif de connexion électrique 10 d'être connectées à la première partie 14 de l'élément chauffant 2 disposée sur la face supérieure 13, le dispositif de connexion électrique 10 consistant en l'espèce en des fils conducteurs, mais qui peut consister également en des patins flexibles par exemple.

L'utilisation de fils conducteurs 10 permet avantageusement de positionner l'élément chauffant 2 sur la face supérieure 13, de manière à ce qu'il ne soit pas forcément en regard du connecteur électrique 17, en position assemblée du balai 1. L'élément chauffant 2 disposé sur la face supérieure 13 peut ainsi être positionné en dehors de la zone de liaison entre la vertèbre 3 et le connecteur électrique 17.

L'assemblage du dispositif chauffant au connecteur électrique 17 s'effectue en mettant en oeuvre les étapes suivantes :
- l'introduction de la vertèbre 3 à l'intérieur du logement 19 de la monture de support 18, la vertèbre 3 étant introduite au niveau de l'une des extrémités longitudinales de ladite monture de support 18 ;
- le coulissement longitudinal de la vertèbre 3 jusqu'à sa position finale ;
- la mise en contact du dispositif de connexion électrique 10 du connecteur électrique 17 et de la première partie 14 de l'élément chauffant 2 disposée sur la face supérieure 13 de la vertèbre 3.

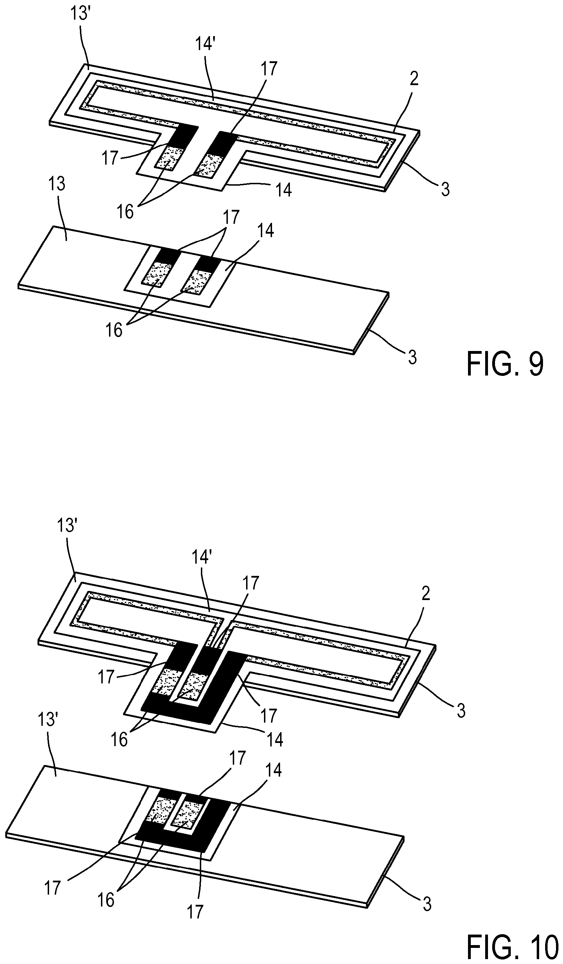

La figure 9 représente un perfectionnement de l'invention, notamment une amélioration du dispositif chauffant de la figure 3. En effet, le but est d'améliorer la conception de l'élément chauffant 2, en particulier sa robustesse au pliage et au risque de surchauffe locale. Ainsi, une augmentation de la section 17 de l'élément chauffant 2 est réalisée localement, c'est-à-dire que la section 17 de l'élément chauffant 2 est augmentée seulement dans une zone située entre le pavé de contact 16 qui se trouve sur la face supérieure 13 de la vertèbre 3 et le début de la majeure partie de l'élément chauffant 2 qui se trouve sur la partie inférieure 13' de la vertèbre 3. Ainsi, la section 17 de l'élément chauffant 2 est augmentée localement au niveau de la zone de rabattement, ou zone de pliage, c'est-à-dire la zone ou l'élément chauffant 2 est disposé sur la bordure longitudinale de la vertèbre 3.

Dans cette zone de pliage, il peut y avoir une mauvaise adhésion de l'élément chauffant 2 sur la bordure longitudinale de la vertèbre 3, et de ce fait un mauvais transfert thermique vers la vertèbre 3, il y a un donc un risque potentiel de surchauffe de l'élément chauffant 2, ce qui peut entrainer un endommagement de celui-ci, et conduire à la perte de la fonction de chauffage. En effet, grâce à une section 17 plus importante, on assure tout d'abord une meilleure résistance mécanique de l'élément chauffant 2 lors du pliage ou du rabattement. De plus, en augmentant localement la section 17 de l'élément chauffant 2, cela engendre une diminution de la résistance et donc une diminution de l'énergie dissipée par effet Joule et donc de l'échauffement local.

De manière alternative, il est tout à fait possible que le matériau de l'élément chauffant situé sur la face supérieure de la vertèbre ou l'élément chauffant situé sur la face supérieure de la vertèbre et sur un des bords longitudinaux de la vertèbre soit différent du matériau de l'élément chauffant situé sur la face inférieure de la vertèbre. Par exemple, le matériau de l'élément chauffant situé sur la face supérieure de la vertèbre ou l'élément chauffant situé sur la face supérieure de la vertèbre et sur un des bords longitudinaux de la vertèbre peut être un matériau conducteur et le matériau de l'élément chauffant situé sur la face inférieure de la vertèbre un matériau résistif.

Cette solution est applicable à l'élément chauffant 2 avec une piste conductrice disposée en structure « série », comme le représente la figure 9 ou bien en « parallèle » comme visible sur la figure 10.

## Revendications

1. Dispositif chauffant apte à être monté sur un balai (1) d'essuie-glace articulé sur un bras d'actionnement, le dispositif chauffant comportant :
au moins une vertèbre (3) apte à être montée dans au moins un logement du balai d'essuie-glace (1), une face dite supérieure (13) de la vertèbre (3) se trouvant en regard du bras d'actionnement en position assemblée du balai (1) avec le bras d'actionnement et une face dite inférieure (13') étant opposée à la face supérieure (13);
au moins un élément chauffant (2) dont une première partie (14) est disposée sur la face supérieure (13) de la vertèbre (3),
une seconde partie (14') de l'élément chauffant (2) étant disposée sur la face inférieure (13') de la vertèbre (3), les premières et secondes parties (14, 14') de l'élément chauffant (2) étant en contact électrique l'une avec l'autre et **caractérisé en ce que** la première partie (14) de l'élément chauffant (2) est disposé sur la face supérieure (13) de la vertèbre (3) uniquement au niveau d'une zone de contact avec un dispositif de connexion électrique (10).

2. Dispositif chauffant selon la revendication 1, **caractérisé en ce que** la vertèbre (3) présente une forme de lame sensiblement longitudinale de section rectangulaire.

3. Dispositif chauffant selon l'une des revendications précédentes, **caractérisé en ce que** la première partie (14) de l'élément chauffant (2) ne génère pas de calories sur la face supérieure (13) de la vertèbre (3).

4. Dispositif chauffant selon l'une des revendications précédentes, **caractérisé en ce que** l'élément chauffant (2) est disposé sur la face supérieure (13) de la vertèbre (3), sur au moins l'un des bords longitudinaux de la vertèbre (3) et sur la grande face inférieure (13') de la vertèbre (3).

5. Dispositif chauffant selon l'une des revendications précédentes, **caractérisé en ce que** la section (17) de l'élément chauffant (2) située sur au moins un des bords longitudinaux de la vertèbre (3) est différente de la section de l'élément chauffant (2) située au niveau de la face inférieure (13')

6. Dispositif chauffant selon l'une des revendications précédentes, **caractérisé en ce que** l'élément chauffant (2) est un film chauffant composé d'au moins une piste conductrice disposée entre deux feuilles réalisées en matériau électriquement isolant.

7. Dispositif chauffant selon l'une des revendications précédentes, **caractérisé en ce que** l'élément chauffant (2) est un fil chauffant.

8. Dispositif chauffant selon l'une des revendications précédentes, **caractérisé en ce que** la première partie (14) du film chauffant (2) disposée sur la face supérieure (13) de la vertèbre (3) comprend une piste conductrice dont au moins l'une des extrémités présente sensiblement la forme d'un pavé de contact (16) sur lequel le dispositif de connexion électrique (10) est en contact.

9. Dispositif chauffant selon l'une des revendications précédentes, **caractérisé en ce qu'**il comporte deux vertèbres (3) et est apte à être connecté au corps (5) d'une lame racleuse (4) d'un balai d'essuie-glace (1) par insertion dans deux logements latéraux dudit corps (5) consistant en des rainures latérales axées longitudinalement, chaque vertèbre (3) étant apte à être montée longitudinalement à l'intérieur d'une rainure respective.

10. Dispositif chauffant selon l'une des revendications 1 à 8, **caractérisé en ce qu'**il est apte à être monté sur une monture de support (18) d'un balai d'essuie-glace (1) par coulissement dans un logement (19) de la monture de support (18), la vertèbre (3) du dispositif chauffant étant apte à être montée longitudinalement à l'intérieur du logement (19) de la monture de support (18).

11. Balai d'essuie-glace (1), **caractérisé en ce qu'**il comprend un dispositif chauffant selon l'une des revendications 1 à 10.

12. Balai d'essuie-glace (1) comprenant des éléments de structure constitués au moins par :
- un support longitudinal (18),
- une lame racleuse (4) fixée audit support (18),
- un accessoire (15) comportant au moins une rampe de projection d'un liquide de lavage, ledit accessoire (15) étant assemblé audit support (18),
**caractérisé en ce que** le balai d'essuie-glace (1) comprend un dispositif chauffant selon l'une des revendications 1 à 10 disposé dans un logement (19) dudit support (18).

13. Balai d'essuie-glace (1) comprenant des éléments de structure constitués au moins par :
- un support longitudinal (18),
- une lame racleuse (4) fixée audit support (18),
- un accessoire (15) assemblé audit support (18),
**caractérisé en ce que** le balai d'essuie-glace (1) comprend un dispositif chauffant selon l'une des revendications 1 à 10 disposé dans un logement (19) dudit support (18).

14. Balai d'essuie-glace (1) comprenant des éléments de structure constitués au moins par :
- un corps (5) comportant deux logements latéraux,
- une lame racleuse (4),
**caractérisé en ce que** le balai d'essuie-glace (1) comprend deux dispositifs chauffant selon l'une des revendications 1 à 9 disposé dans chaque logement latéral dudit corps (5).

15. Dispositif d'essuyage pour véhicule, **caractérisé en ce qu'**il comprend au moins un balai d'essuie-glace (1) selon l'une des revendications 11 à 14.

## Patentansprüche

1. Heizvorrichtung, welche geeignet ist, an einem Wischerblatt (1) montiert zu werden, das mit einem Betätigungsarm gelenkverbunden ist, wobei die Heizvorrichtung umfasst:
mindestens eine Versteifungsleiste (3), die geeignet ist, in mindestens einer Aufnahme des Wischerblatts (1) montiert zu werden, wobei sich eine als obere bezeichnete Fläche (13) der Versteifungsleiste (3) gegenüber dem Betätigungsarm in der assemblierten Position des Wischerblatts (1) befindet, in welcher der Betätigungsarm und eine als untere bezeichnete Fläche (13') der oberen Fläche (13) gegenüberliegen;
mindestens ein Heizelement (2), von dem ein erster Teil (14) auf der oberen Fläche (13) der Versteifungsleiste (3) angeordnet ist,
wobei ein zweiter Teil (14') des Heizelements (2) auf der unteren Fläche (13') der Versteifungsleiste (3) angeordnet ist, wobei der erste und zweite Teil (14, 14') des Heizelements (2) in elektrischem Kontakt miteinander stehen, und
**dadurch gekennzeichnet, dass** der erste Teil (14) des Heizelements (2) auf der oberen Fläche (13) der Versteifungsleiste (3) nur auf der Höhe einer Kontaktzone mit einer elektrischen Anschlussvorrichtung (10) angeordnet ist.

2. Heizvorrichtung nach Anspruch 1, **dadurch gekennzeichnet, dass** die Versteifungsleiste (3) eine Form einer im Wesentlichen länglichen Lamelle mit rechteckigem Querschnitt aufweist.

3. Heizvorrichtung nach einem der vorhergehenden Ansprüche, **dadurch gekennzeichnet, dass** der erste Teil (14) des Heizelements (2) keine Wärme auf der oberen Fläche (13) der Versteifungsleiste (3) erzeugt.

4. Heizvorrichtung nach einem der vorhergehenden Ansprüche, **dadurch gekennzeichnet, dass** das Heizelement (2) auf der oberen Fläche (13) der Versteifungsleiste (3) an mindestens einem der Längsränder der Versteifungsleiste (3) und auf der großen unteren Fläche (13') der Versteifungsleiste (3) angeordnet ist.

5. Heizvorrichtung nach einem der vorhergehenden Ansprüche, **dadurch gekennzeichnet, dass** der Querschnitt (17) des Heizelements (2), der an mindestens einem der Längsränder der Versteifungsleiste (3) angeordnet ist, von dem Querschnitt des Heizelements (2), der auf der Höhe der unteren Fläche (13') angeordnet ist, verschieden ist.

6. Heizvorrichtung nach einem der vorhergehenden Ansprüche, **dadurch gekennzeichnet, dass** das Heizelement (2) ein Heizfilm ist, der aus mindestens einer Leiterbahn besteht, welche zwischen zwei Folien angeordnet ist, die aus einem elektrisch isolierenden Material hergestellt sind.

7. Heizvorrichtung nach einem der vorhergehenden Ansprüche, **dadurch gekennzeichnet, dass** das Heizelement (2) ein Heizdraht ist.

8. Heizvorrichtung nach einem der vorhergehenden Ansprüche, **dadurch gekennzeichnet, dass** der erste Teil (14) des Heizfilms (2), der auf der oberen Fläche (13) der Versteifungsleiste (3) angeordnet ist, eine Leiterbahn umfasst, von der mindestens eines der Enden im Wesentlichen die Form einer Kontaktstelle (16) aufweist, mit der die elektrische Anschlussvorrichtung (10) in Kontakt steht.

9. Heizvorrichtung nach einem der vorhergehenden Ansprüche, **dadurch gekennzeichnet, dass** diese zwei Versteifungsleisten (3) umfasst und geeignet ist, mit dem Körper (5) einer Abstreifleiste (4) eines Wischerblatts (1) durch Einsetzen in zwei seitliche Aufnahmen des Körpers (5) verbunden zu werden, bestehend aus seitlichen längsausgerichteten Rillen, wobei jede Versteifungsleiste (3) geeignet ist, in Längsrichtung im Inneren einer jeweiligen Rille montiert zu werden.

10. Heizvorrichtung nach einem der Ansprüche 1 bis 8, **dadurch gekennzeichnet, dass** diese geeignet ist, an einem Trägergestell (18) eines Wischerblatts (1) durch Gleiten in eine Aufnahme (19) des Trägergestells (18) montiert zu werden, wobei die Versteifungsleiste (3) der Heizvorrichtung geeignet ist, in Längsrichtung im Inneren der Aufnahme (19) des Trägergestells (18) montiert zu werden.

11. Wischerblatt (1), **dadurch gekennzeichnet, dass** dieses eine Heizvorrichtung nach einem der Ansprüche 1 bis 10 umfasst.

12. Wischerblatt (1), umfassend Strukturelemente, mindestens bestehend aus:
- einem Längsträger (18),
- einer Abstreifleiste (4), die an dem Träger (18) befestigt ist,
- einer Hilfsvorrichtung (15), umfassend mindestens eine Rampe zum Ausspritzen einer Waschflüssigkeit, wobei die Hilfsvorrichtung (15) mit dem Träger (18) zusammengefügt ist,
**dadurch gekennzeichnet, dass** das Wischerblatt (1) eine Heizvorrichtung nach einem der Ansprüche 1 bis 10 umfasst, die in einer Aufnahme (19) des Trägers (18) angeordnet ist.

13. Wischerblatt (1), umfassend Strukturelemente, mindestens bestehend aus:
- einem Längsträger (18),
- einer Abstreifleiste (4), die an dem Träger (18) befestigt ist,
- einer Hilfsvorrichtung (15), die mit dem Träger (18) zusammengefügt ist,
**dadurch gekennzeichnet, dass** das Wischerblatt (1) eine Heizvorrichtung nach einem der Ansprüche 1 bis 10 umfasst, die in einer Aufnahme (19) des Trägers (18) angeordnet ist.

14. Wischerblatt (1), umfassend Strukturelemente, mindestens bestehend aus:
- einem Körper (5), umfassend seitliche Aufnahmen,
- einer Abstreifleiste (4),
**dadurch gekennzeichnet, dass** das Wischerblatt (1) zwei Heizvorrichtungen nach einem der Ansprüche 1 bis 9 umfasst, die in jeder seitlichen Aufnahme des Körpers (5) angeordnet sind.

15. Vorrichtung zur Reinigung für ein Fahrzeug, **dadurch gekennzeichnet, dass** diese mindestens ein Wischerblatt (1) nach einem der Ansprüche 11 bis 14 umfasst.

## Claims

1. Heating device adapted to be mounted on a windscreen wiper (1) articulated to an actuator arm, the heating device including:
at least one vertebra (3) adapted to be mounted in at least one housing of the windscreen wiper (1), a so-called upper face (13) of the vertebra (3) facing the actuator arm in the assembled position of the wiper (1) and the actuator arm and a so-called lower face (13') being opposite the upper face (13), and
at least one heating element (2) a first portion (14) of which is on the upper face (13) of the vertebra (3),
a second portion (14') of the heating element (2) being on the lower face (13') of the vertebra (3), the first and second portions (14, 14') of the heating element (2) being in electrical contact with each other and **characterized in that** the first portion (14) of the heating element (2) is on the upper face (13) of the vertebra (3) only in the area of contact with an electrical connection device (10).

2. Heating device according to Claim 1,
**characterized in that** the vertebra (3) has the shape of a substantially longitudinal blade of rectangular section.

3. Heating device according to any one of the preceding claims,
**characterized in that** the first portion (14) of the heating element (2) does not generate heat on the upper face (13) of the vertebra (3).

4. Heating device according to any one of the preceding claims,
**characterized in that** the heating element (2) is on the upper face (13) of the vertebra (3), on at least one of the longitudinal edges of the vertebra (3) and on the lower large face (13') of the vertebra (3).

5. Heating device according to any one of the preceding claims,
**characterized in that** the section (17) of the heating element (2) on at least one of the longitudinal edges of the vertebra (3) is different from the section of the heating element (2) on the lower face (13').

6. Heating device according to any one of the preceding claims,
**characterized in that** the heating element (2) is a heating film consisting of at least one conductive track between two sheets of electrically insulative material.

7. Heating device according to any one of the preceding claims,
**characterized in that** the heating element (2) is a heating wire.

8. Heating device according to any one of the preceding claims,
**characterized in that** the first portion (14) of the heating film (2) on the upper face (13) of the vertebra (3) includes a conductive track at least one end of which is substantially the shape of a contact block (16) with which the electrical connection device (10) is in contact.

9. Heating device according to any one of the preceding claims,
**characterized in that** it includes two vertebrae (3) and is adapted to be connected to the body (5) of a wiper blade (4) of a windscreen wiper (1) by insertion in two lateral housings of said body (5) consisting of longitudinal axis lateral grooves, each vertebra (3) being adapted to be mounted longitudinally inside a respective groove.

10. Heating device according to any one of Claims 1 to 8,
**characterized in that** it is adapted to be mounted on a supporting mount (18) of a windscreen wiper (1) by sliding in a housing (19) of the supporting mount (18), the vertebra (3) of the heating device being adapted to be mounted longitudinally inside the housing (19) of the supporting mount (18).

11. Windscreen wiper (1),
**characterized in that** it includes a heating device according to any one of Claims 1 to 10.

12. Windscreen wiper (1) including structural elements consisting at least of:
- a longitudinal support (18),
- a wiper blade (4) fixed to said support (18), and
- an accessory (15) including at least one washing liquid sprayer manifold, said accessory (15) being assembled to said support (18),
**characterized in that** the windscreen wiper (1) includes a heating device according to any one of Claims 1 to 10 in a housing (19) of said support (18).

13. Windscreen wiper (1) including structural elements consisting at least of:
- a longitudinal support (18),
- a wiper blade (4) fixed to said support (18), and
- an accessory (15) assembled to said support (18),
**characterized in that** the windscreen wiper (1) includes a heating device according to any one of Claims 1 to 10 in a housing (19) of said support (18).

14. Windscreen wiper (1) including structural elements consisting at least of:
- a body (5) including two lateral housings, and
- a wiper blade (4),
**characterized in that** the windscreen wiper (1) includes two heating devices according to any one of Claims 1 to 9 in each lateral housing of said body (5).

15. Vehicle wiper device,
**characterized in that** it includes at least one windscreen wiper (1) according to any one of Claims 11 to 14.
